# EUROPÄISCHE PATENTSCHRIFT

(11) **EP 2 431 226 B1**
(45) Veröffentlichungstag und Bekanntmachung des Hinweises auf die Patenterteilung: **27.07.2016**
(21) Anmeldenummer: 10178378.5
(22) Anmeldetag: 22.09.2010
(51) Int. Cl.: B60R 1/00

(54) **Rückblickeinrichtung für ein Kraftfahrzeug**
Rear view device for a motor vehicle
Dispositif de rétroviseur pour un véhicule automobile

(30) Priorität: 17.09.2010 EP 10177322
(43) Veröffentlichungstag der Anmeldung: 21.03.2012
(73) Patentinhaber: SMR Patents S.à.r.l., 1653 Luxembourg (LU); AUDI AG, 85045 Ingolstadt (DE)
(72) Erfinder: Hottmann, Philipp, 70563, Stuttgart (DE); Heinemann, Patrick, 85092 Kösching (DE); Liepold, Markus, 85092 Ingolstadt (DE); Prücklmeier, Andreas, 93080 Pentling (DE)
(74) Vertreter: Weber-Bruls, Dorothée

(56) Entgegenhaltungen:
- WO-A1-2006/018951
- US-A1- 2004 230 358
- US-A1- 2010 039 494

## Beschreibung

Die Erfindung betrifft eine Rückblickeinrichtung für ein Kraftfahrzeug, die als Außenspiegelersatz dient, sowie eine Rückblickeinrichtung, die jeden im Fahrzeug vorhanden Spiegel ersetzt.

### Stand der Technik

Üblicherweise ist an Kraftfahrzeugen an jeder Seite im Bereich des vorderen Endes der Vordertürseitenscheiben ein Seitenrückblickspiegel angeordnet, durch den der Fahrer des Fahrzeugs das Verkehrsgeschehen hinter dem Fahrzeug und seitlich des Fahrzeugs beobachten kann, um beispielsweise festzustellen, ob eine Fahrspur gewechselt werden kann oder ob abgebogen werden kann. Eine Eigenart solcher Seitenrückblickspiegel ist, dass der nach hinten einsehbare Winkelbereich begrenzt ist, dass die Seitenrückblickspiegel relativ weit über die Kontur des Fahrzeugs herausstehen, so dass sie zusätzliche Fahrzeugbreite verursachen und den Luftwiderstand negativ beeinflussen, und dass die Bedienperson den Blick relativ weit vom Verkehrsgeschehen vor dem Fahrzeug abwenden muss, was zu gefährlichen Situationen führen kann.
Der Vorteil eines Spiegels besteht allerdings darin, dass sich das Auge nicht auf den Nahbereich fokussieren muss, sondern dass das gespiegelte Bild durch normale Ferneinstellung des Auges der Bedienperson scharf gestellt ist

In der Literatur wird breit über den Ersatz eines einfachen Spiegels durch Kameras mit unterschiedlichen Displaysystemen diskutiert. Dabei steht der Spiegelersatz im Vordergrund, der einen Reduktion des Windwiderstands beinhaltet, aber für die Bedienperson keinen weiteren Vorteil aufweist.

Aus der DE 697 09 810 T9 ist eine Rückblickeinrichtung mit Kamera für ein Kraftfahrzeug bekannt, bei der in jedem Rückblickspiegel
zusätzlich eine elektronische Kamera vorgesehen ist, deren Bild auf je ein Display übertragen wird, das an der dem jeweiligen Rückblickspiegel
zugewandten Seite des Lenkrades angeordnet ist. Es kann eine zusätzliche Kamera am Fahrzeug angeordnet sein, die den Bereich hinter dem
Fahrzeug erfasst und deren Brennweite und/oder Stellung zur Anpassung an bestimmte Fahr- und Gefahrensituationen veränderbar ist. Die von den
Kameras gelieferten Bilder können digitalisiert werden, so dass von hinten kommende oder bereits schräg hinter dem Fahrzeug befindliche Fahrzeuge
erkannt werden, mit denen beispielsweise bei einem Spurwechsel vor einem Überholmanöver eine Kollisionsgefahr besteht.

Die DE 100 43 099 A1 offenbart eine Überwachungsvorrichtung des rückwärtigen Bereichs eines Fahrzeugs mittels mindestens einer Videokamera. Die Videokamera ist an der der Gegenfahrbahn zugewandten Seite des Fahrzeugs angebracht und überwacht den rückwärtigen Bereich des Fahrzeugs. Die Videokamera kann mindestens zwei unterschiedliche Abbildungsmaßstäbe bei unterschiedlichen Blickwinkeln ermöglichen, die an zwei Monitoren oder auf einem Monitor mit zwei unterschiedlichen Bildbereichen angezeigt werden. Die unterschiedlichen Abbildungsmaßstäbe werden entsprechend der Fahrtrichtung automatisch gewählt.

Aus der DE 696 18 192 T3 ist ein Fahrzeug-Rückblicksystem mit Panorama Sicht bekannt. Das Rückblicksystem beinhaltet wenigstens
zwei seitliche Bilderfassungsvorrichtungen, die jeweils im Bereich der vorderen Kotflügel des Fahrzeugs angeordnet sind, sowie eine mittlere
Bilderfassungsvorrichtung im Heckbereich des Fahrzeugs. Die Bilderfassungsvorrichtungen sind im allgemeinen hinter das Fahrzeug gerichtet. Ein
Bildprozessor empfängt Datensignale der Bilderfassungsvorrichtungen und synthetisiert aus diesen Datensignalen ein zusammengesetztes Bild, das
auf einer Anzeige im Bereich des Armaturenbretts angezeigt wird.

Aus der DE102007054342 ist eine Kameralösung mit einer aktiven Komponente bekannt. Der Blickwinkel des Kamerasystems ändert sich, sobald der Blinker gesetzt wird. Dadurch wird zumindest ein Mehrwert für die Bedienperson erzielt.

Alle bisher diskutierten Systeme sind Prototypen-Lösungen, deren Umsetzung in ein Serienprodukt Problem macht. So ist die Aufgabe, wie die Bauteile konkret zusammenwirken und wie sich Datenlaufzeiten auswirken nicht gelöst.

Die WO 2006018951 offenbart eine Kraftfahrzeugrückblickeinrichtung gemäß den Oberbegriff des Anspruchs 1.

Der Erfindung liegt die Aufgabe zugrunde, eine Rückblickeinrichtung für ein Kraftfahrzeug zu schaffen, die der Bedienperson des Fahrzeugs eine Beobachtung des Verkehrsgeschehens nach rückwärts mindestens an beiden Fahrzeugseiten ermöglicht, wobei Zusatzinformationen zur Verfügung gestellt werden. Die Rückblickeinrichtung für ein Kraftfahrzeug reduziert den Luftwiderstand des Fahrzeugs maßgeblich. Es ermöglicht, die Daten im Fahrzeug effektiv zu verteilen und zu verarbeiten, ohne dass Darstellungsprobleme durch Datenlaufzeiten auftreten.

Diese Aufgabe wird mit einer seitenrückblickspiegellosen Rückblickeinrichtung für ein Kraftfahrzeug gemäß dem Anspruch 1 gelöst.

Die Unteransprüche sind auf vorteilhafte Ausführungsformen und Weiterbildungen der erfindungsgemäßen Rückblickeinrichtung für ein Kraftfahrzeug gerichtet.

### Beschreibung der Erfindung

Die Erfindung wird im Folgenden beispielsweise und mit weiteren Einzelheiten anhand einer schematischen Zeichnung erläutert. Es zeigen:
- **Fig. 1**: eine Draufsicht auf einen Personenkraftwagen;
- **Fig. 2**: eine schematische Darstellung eines Aufbaus in einem Fahrzeug;
- **Fig. 3**: eine Ansicht auf die Schalttafel eines Fahrzeugs vom Innenraum aus;
- **Fig. 4**: eine schematische Darstellung eines bezüglich Fig. 2 alternativen Aufbaus im Fahrzeug.

In der nachfolgenden Figurenbeschreibung sind mit vorne die Fahrzeugvorwärtsrichtung, mit hinten die Fahrzeugrückwärtsrichtung, mit der
rechten Seite die in Vorwärtsrichtung gesehene rechte Seite des Fahrzeugs und mit linker Seite die in Vorwärtsrichtung gesehene linke Seite des Fahrzeugs bezeichnet.

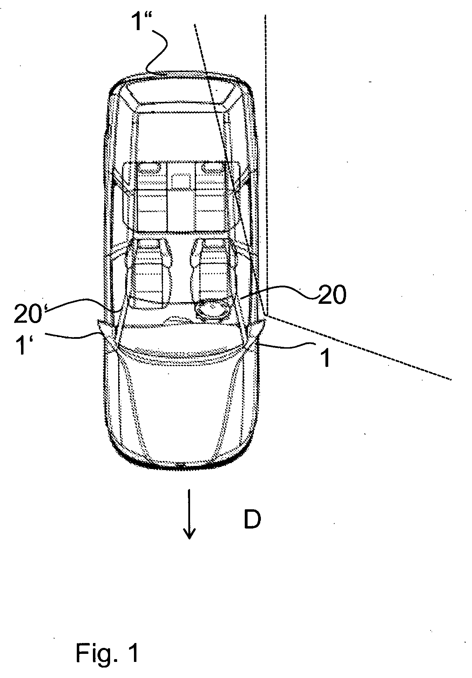

Gemäß Fig. 1 sind an einem in Draufsicht gezeigten Personenkraftwagen, dessen Vorwärtsrichtung in der Figur 1 durch den Pfeil D angegeben ist, im Bereich der vorderen seitlichen Karosseriesäulen 20, 20' ist jeweils eine elektronische Kameraeinheit 1,1' angebracht, deren Blickfeld nach hinten jeweils einen Winkel α und α' überstreicht. Der überstrichene Raumwinkel ist mit gestrichelten Linien eingezeichnet , wobei die innere Begrenzung eine Linie ist, die gegen die Fahrzeuglängsmittelebene geneigt ist und deren äußere Begrenzung mit der Fahrzeuglängsrichtung einen Winkel von beispielsweise etwa 10 bis 90 Grad bildet. Die Kamera weist ein Weitwinkelobjektiv auf, das in der Lage ist, einen weiteren Bereich, als er von einem Spiegel erfasst würde, zu überstreichen. Dazu werden Weitwinkelobjektive oder Linsen eingesetzt, so dass der Bildausschnitt den die Kamera zu sehen bekommt damit vorbestimmt ist. Die Ausführung kann je nach Wahl der Optik ausgelegt werden, je nachdem ob die einfache Sicht eines klassischen Spiegels nachgebildet werden soll oder ein viel weiterer Bereich für eine Darstellung der Vogelperspektive gewünscht wird. Hier sind durchaus Fisch-Augen-Optiken einsetzbar, die eine Sicht von 180 Grad und mehr erlauben.

Die Kameraeinheiten 1, 1' sind in diesem Ausführungsbeispiel ungefähr an der Position der Außenrückblickspiegel angebracht. Dadurch erhält man - bei geeigneter Auswertung - einen Blickwinkel und damit ein resultierendes Bild, das in etwa dem vertrauten Spiegelbild entspricht. Allerdings ist für die Ausführung der Erfindung die genaue Anbringung der Kameraeinheiten 1, 1' am Fahrzeug nicht von Bedeutung.

Am Heck der Fahrzeugs ist in diesem Beispiel eine weitere Kameraeinheit 1 ", die den Bereich hinter dem Fahrzeug überstreicht und deren Bild in einem Bildschirm an der Innenspiegelstelle dargestellt wird.

Das von jeder Kameraeinheit 1, 1', 1" aufgenommene Bild wird in an sich bekannter Weise gewandelt und auf je einem Bildschirm wiedergegeben.

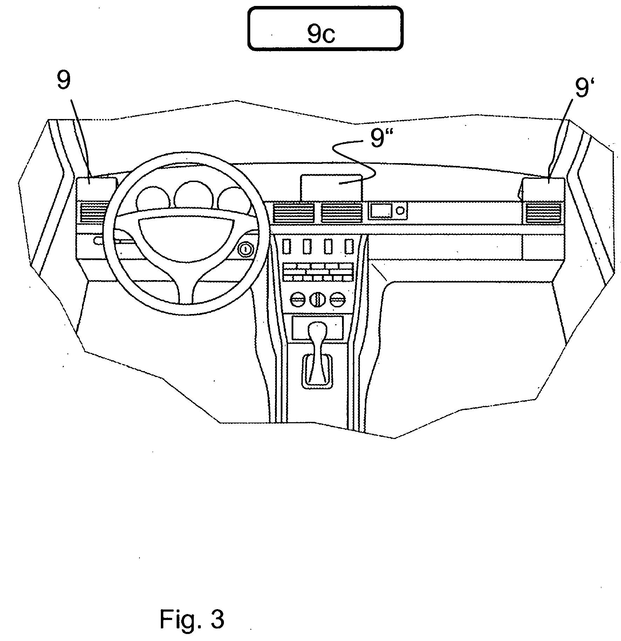

Fig. 3 zeigt eine Draufsicht auf eine Schalttafel eines Fahrzeugs mit Bildschirmen 9, 9', die an jeder Seite der Schalttafel im Bereich der A-Säule 20, 20' angebracht sind, wobei der linksseitige Bildschirm der linksseitigen Kameraeinheit 1 zugeordnet ist und der rechtsseitige Bildschirm der rechtsseitigen Kameraeinheit 1'.

Im dargestellten Beispiel enthält die Schalttafel in ihrem mittleren Bereich einen weiteren Bildschirm 9" beispielsweise für ein Fahrzeugnavigationssystem oder als alleiniger Bildschirm, wenn die Bildschirm 9 und 9' nicht eingebaut sind und beide Rückansichten in einem Bildschirm integriert werden.

Ein weiterer Bildschirm 9c kann anstelle des Innenspiegels das Bild der Kameraeinheit 1" darstellen. Seine Position ist dabei der Anbringungsort eines klassischen Innenspiegels.

Der Aufbau der elektronischen Kameraeinheiten 1, 1', 1" und des elektronischen Steuersystems, in dem auch die Verarbeitung der von den
elektronischen Kameraeinheiten 1, 1', 1" aufgenommenen Bilder erfolgt, sind an sich bekannt und werden daher nicht im Einzelnen erläutert. Das elektronische Steuersystem ist nicht zwingend in einer Einheit zusammengefasst, sondern auf mehrere Komponenten im Fahrzeug verteilt und mit anderen Komponenten zumindest teilweise zusammengefasst

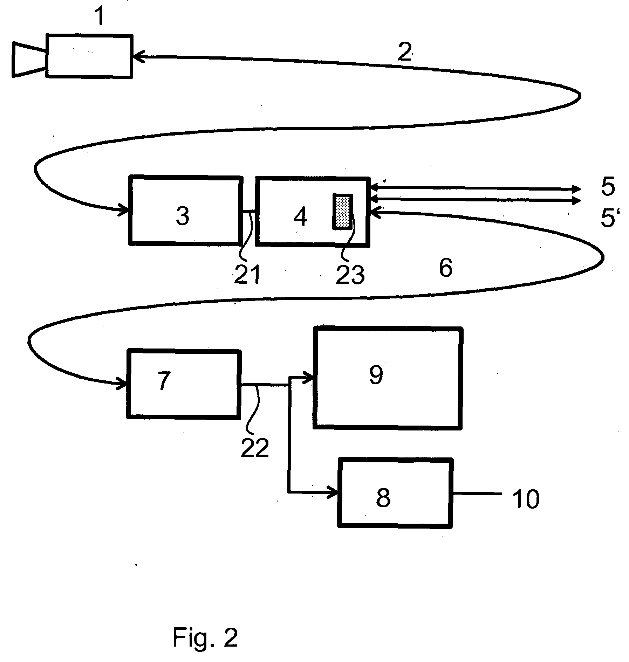

Figur 2 zeigt einen typischen Aufbau eines erfindungsgemäßen Systems unter realistischen Einbaubedingungen in einem Fahrzeug. Eine Kamera, die aus einem optischen Sensor mit geeigneter Aufnahmeoptik besteht ist an der Außenseite der Karosserie eines Fahrzeugs angebracht.

Der optische Sensor ist beispielsweise eine Sensortechnologie mit einer ladungsgekoppelte Einrichtung (CCD = Charge-Coupled Device) oder einem komplementären Metall-Oxid-Halbleiter (CMOS = Complementary Metal Oxide Semiconductor) zum Erfassen von kontinuierlichen Echtzeit-Bildern. Vorteilhafterweise werden für die Umgebungsdarstellung den Spiegelersatz Farbsensoren eingesetzt.

Es hat sich als Vorteil erwiesen, für die hohe Dynamik-Unterschiede die HDR High Dynamic Range Technik zu verwenden, um Unter- und Überbelichtungen zu kompensieren.

Das Signal des Sensors 1 wird von einem auf derselben Platine oder zumindest räumlich angrenzend untergebrachten Treiber gesendet. Das Format der Daten ist dabei vorzugsweise ein unverarbeitetes Signal wie "RAW", bei dem die Kamera die Daten nach der Digitalisierung weitgehend ohne Bearbeitung überträgt.

Durch Nutzung der nicht interpolierten Sensordaten mit 10, 12, oder 14 Bit pro Pixel ist ein größerer Dynamikumfang und eine genauere Helligkeitsauflösung gegeben. Auch die Werte nicht zu sehr unter- oder überbelichteter Bildbereiche sind meist noch in nutzbarer Form vorhanden. Sämtliche vom Bildsensor erfassten Details bleiben vollständig erhalten.

Solange die Bandbreite der nachfolgenden Übertragung ausreicht, sind RAW-Daten von Vorteil.

Die erfmdungsgemäße Lösung ist aber auch mit RGB-Signalen oder YUV-Signalen realisierbar. Auch hier sind die Daten noch nicht komprimiert.

Als Bildwiederholrate mit der Abkürzung fps (für das englische Frames per Second) bezeichnet bei Videoaufnahmen sowie bei graphischen Computeranwendungen die Anzahl der (sich ändernden) Bilder pro Sekunde.

Das menschliche Gehirn nimmt ab etwa 14 bis 16 Bildern pro Sekunde aufeinanderfolgende Bilder als scheinbar bewegte Szene wahr, weswegen die Bildfrequenz bei normalen Displays wie dem Fernsehen bei 25 fps liegt. Eine Bildwiederholrate von 30 fps erlaubt eine sehr gute Bildwiedergabe. Für die Anwendung im automotiven Bereich muss der Bildsensors bei hohen Geschwindigkeiten und unter schwierigen Lichtbedingungen arbeiten. Hier stellen vor allem Beleuchtungseinrichtungen der Fahrzeuge, in denen gepulste LEDs betrieben werden, sowie stroboskopische Warnhinweise eine Herausforderung dar. Daher ist auf längere Sicht eine etwas höhere Bildrate durchaus wünschenswert.

Der optische Sensor 1 ist mit einem Sternvierer (Twisted Quad-Kabel) an eine Empfängerplatine 3 angeschlossen. Auf der Empfängerplatine 3 wird das Signal von seriellen Daten in Paralleldaten zurückgewandelt. Der Sternvierer gehört zu den symmetrischen Kupferkabeln. Bei dem Sternvierer-Kabel sind vier Adern miteinander kreuzförmig verseilt. Das bedeutet, dass die gegenüberliegenden Adern jeweils ein Adernpaar bilden. Es ist von Vorteil dabei für die Übertragung des Signals ein LVDS (Low Voltage Differential Signaling) Signal auf zwei über kreuzliegenden Adern zu kodieren. Dadurch wird das Signal robust gegen Störungen. Die beiden verbleibenden Adern des Quad-Kabels werden für die Spannungsversorgung verwendet. Für die Übertragung können auch weitere Kodierungen wie CMS (Current Mode Logic), oder komplexere Kodes wie LVPECL (Low-voltage positive emitter-coupled logic) oder LVCMOS (Low Voltage Complementary Metal Oxide Semiconductor) verwendet werden.

Die miteinander verseilten vier Adern werden von einem gemeinsamen Schutzmantel umgeben, der eine Geflecht- oder Folienschirmung umfassen kann. Dieser mechanische Aufbau bestimmt die übertragungstechnischen Parameter wie das Nebensprechen, das Dämpfung-Nebensprech-Verhältnis oder das Nahnebensprechen.

Der große Vorteil an einer Twisted Quad-Video-Übertragung ist die große erreichbare Übertragungsstrecke. Übertragungen bis 150 m sind theoretisch möglich und daher ist diese Übertragungsart für ein Fahrzeug gut geeignet. In der Praxis ist die Übertragungslänge nicht größer als 10 m, was zu einer sicheren und zuverlässigen störungsfreien Übermittlung der Daten führt.

Die Empfängerplatine 3 kann dadurch im großen Abstand zum optischen Sensor 1 an einer beliebigen Position im Fahrzeug angebracht werden. Die Empfängerplatine 3 wird vorzugsweise in den Türen oder unter dem Armaturenbrett angebracht. In den Fahrzeugtüren muss gewährleitet sein, dass keine Feuchtigkeit eindringt. Die Empfängerplatine 3 ist dabei größeren Vibrationen und Erschütterungen ausgesetzt, für die sie ausgelegt sein muss. Die Empfängerplatine 3 ist mit einer Bildauswertungs-Platine 4, die einen Digitalen Signalprozessor DSP enthält über eine parallelen Datenleitung 2 verbunden. Die Bildauswertungs-Platine 4 weist Verarbeitungskapazitäten auf, die durch eine Berechnungseinheit hergestellt werden, wie beispielsweise einen DSP, ein feldprogrammierbares Gate-Array bzw. FPGA (FPGA = field programmable gate array), Mikroprozessoren oder anwendungsspezifische Schaltkreise bzw. ASICs (ASIC = application specific integrated circuit) oder eine Kombination davon, die Programmierfähigkeiten aufweisen, beispielsweise durch ein computerlesbares Medium wie Software oder Firmware, die in einem Mikroprozessor aufgenommen ist, einschließlich ROM (ROM = Read Only Memory), oder wie eine binäre Bilddatei, die von einem Anwender programmiert werden kann.

Die Bildauswertungs-Platine 4 weist weitere Schnittstellen 5, 5' auf, die zum Empfang von Daten des im Fahrzeug vorhandenen Bussystems dienen, wie dem weit verbreiteten CAN - Bus, dem LIN -Bus oder einer Kombination daraus. Diese Schnittstelle 5 dient dazu Zustandsdaten des Fahrzeugs zu übernehmen und für die weitere Verarbeitung in der Software, die auf dem DSP läuft zur Verfügung zu stellen. Der CAN-Bus überträgt nicht nur Fahrzeugdaten , sondern kann auch zur gegenseitigen Kommunikation der Module , z.B. Verifikation von erkannten Objekten, o.ä., einer Programmierung der Module via PC, oder zur Übermittlung von Parametern via PC genutzt werden.

Eine weitere Schnittstelle 5' dient zur Ausgabe eines Signals, das einen Warnhinweis enthält. Das Warnsignal wird dabei auf eine Warneinrichtung übertragen, die ein Warnlicht wie einen aufleuchtende LED ist, oder einen verbale Warnung über das Radio oder ein Warnton oder über den Can-Bus eingesteuert eine Ansteuerung eines Vibrationsmotors im Lenkrad oder im Sitz usw.

Die Schnittstellen 5 und 5' dienen auch zur Tag/Nachteinstellung des Bildschirms 9. Durch die Bildauswertung ist eine Entscheidung Tag oder Nacht möglich. Das Ergebnis wird dann über den Fahrzeugbus oder über eine getrennte Leitung an den Bildschirm 9 gegeben, um die Helligkeit des Bildschirms 9 zu regeln. Die Regelung erfolgt dabei in etwa 100 Schritten, so dass ein feines Abdimmen oder Aufblenden des Bildschirms erfolgen kann.

Die Bildauswertungs-Platine 4 beinhaltet einen weiteren Treiber, der die parallelen Daten serialisiert und für einen Übertragung über ein weiteres Twisted Quad-Kabel aufbereitet.

Auf der Bildauswertungs-Platine 4 findet die Auswertung der Bilddaten mit einer geeigneten Software statt. Auf der Bildauswertungs-Platine 4 werden die Bilddaten vorverarbeitet. Auf jeden Fall findet auf der Bildauswertungs-Platine 4 die Entzerrung der Bilddaten, die durch die Weitwinkeloptik hervorgerufen wird, statt. Diese Verarbeitungsfunktion erzeugt ein Bild der Kamera 1, das für die Darstellung auf einem Bildschirm 9 ausreicht. Der DSP 23 ist so ausgelegt, dass er noch zusätzliche Funktionen ausführen kann. Die Bilddaten werden je nach zusätzlicher Fahrerassistenzaufgabe untersucht, um die Warn- und Informationsaufgabe für ein Hilfssystem wie ein Spurwechselassistent, Spurhalteassistent, Rückfahrassistent, Bird View, Pre-Crash Sensor, Verkehrszeichenerkennung, Totwinkel-Überwachung sowie weitere Warnsystem, die auf optischen Bildverarbeitung beruhen, zu erfüllen.

Da der Sensor 1 eine höherer Auflösung als der Bildschirm 9 hat, wird auf dem Bildschirm 9 immer nur ein Ausschnitt aus dem aufgenommenen gesamt Bild gezeigt. Daher wird auf der Bildauswertungs-Platine 4 der Bildausschnitt gewählt, der sich auch über das Gesamtbild verschieben kann und so eine Kamerafahrt simuliert. Vorteilhaft ist diese Bildverarbeitung im DSP 23 für das Rückwärtsfahren. Hier wird der Bildausschnitt beispielsweise auf das hintere Rad gerichtet. Ansonsten kann der Bildausschnitt an die persönlichen Gewohnheiten des Fahrers angepasst werden oder den Erfordernissen der gesetzlichen Regelungen.

Zur Auswertung der Bilddaten ist es wichtig, die zeitlich aufeinander folgenden Bilder ohne Verzögerung zu bearbeiten. Daher ist es nicht möglich zwischen der Empfängerplatine 3 und der Bildauswertungs-Platine 4 einen Abstand größer als 100 mm zu zulassen die Verbindung zwischen den beiden Platinen 3 und 4 findet über parallel Datenleitungen 2, 6 statt. Es ist auch möglich die beiden Funktionen, die im Beispiel auf zwei Platinen 3, 7 verteilt sind auf einem Board unterzubringen. Über die Datenleitung 6 geht das serielle Signal an eine weitere Empfänger-Platine 3, an die Display-Empfängerplatine 7. Diese wandelt wieder in parallele Daten und gibt sie über eine Datenleitung 22 an die nahe benachbarte Display-Empfängerplatine mit dem Bildschirm 9 weiter. Parallel dazu werden die Videodaten auf eine Prüfplatine 8 gesendet und von einem PC oder Rekorder über die Schnittstelle 10 mitgeschrieben. Die Prüfplatine 8 empfängt die bearbeiteten Daten der Bildauswertungs-Platine 4 als parallele Daten pixelweise, damit das Bild auf Fehler untersucht werden kann. Das Datenmaterial kann über spezielle Software ausgewertet werden, um das System zu korrigieren. Diese Funktion ist bei einem Serienprodukt nicht mehr notwendig, aber der Datenausgang wird dann zum zyklischen Schreiben der Bilddaten auf ein Speichermedium genutzt und so einen Fahrtenschreiberfunktion integriert.

Nachdem die Länge der Datenleitungen 2 und 6 unkritisch ist, können die Platinen 4, 7 und Bauteil an geeigneter Stelle irgendwo im Fahrzeug untergebracht sein. Die Verbindungslänge wird sinnvollerweise zwischen 1 m und 5 m liegen, kann aber im Einzelfall auch länger bis zu einem Abstand von 10 m sein. Wichtig ist dabei, dass die seriellen Daten über einen für ein Fahrzeug große Länge übertragen werden, die parallelen Daten aber immer direkt über interne Datenleitungen und kurze Distanzen bis 100 mm.

Die Darstellung der Bilddaten auf dem Bildschirm 9 erfolgt in Echtzeit. Als Mehrwert werden Assistenzfunktionen wie Warnsignale, Verkehrszeichen, Einfärbungen eines Bildausschnittes, Hervorheben einer Kontur etc. dem Bild überlagert.

Die vorliegenden Bilddaten werden dabei bezüglich f unterschiedlicher Parameter ausgewertet, wie Objekterkennung und Klassifizierung des erkannten Objektes in Gefahrenklassen. Damit lässt sich eine Totwinkelanzeige realisieren, die nur bei Annäherung von großen Objekten reagiert. Ist dies der Fall, so erfolgt beispielsweise eine akustische und/oder optische Warnung. Das jeweilige Fahrzeug kann im Bildschirm deutlich, beispielsweise durch rote Einfärbung und Blinken, markiert werden. Die Bedienperson ist dann gewarnt und unterlässt ein Abbiegen. Zusätzlich kann die Tot-Winkel-Anzeige durch Auswertung von Fahrzeugdaten wie dem Einschlagwinkel des Lenkrads oder der Betätigung des Blinkerhebels ergänzt und dadurch verbessert werden.

Ein Pre-Crash-Sensor benötigt gleichzeitig die Geschwindigkeitsdaten des sich nähernden Objektes um eventuell einen Airbag auszulösen, bevor eine Beschleunigung oder Verzögerung am Fahrzeug selbst gemessen werden kann.

Es ist auch eine Kollisionswarnung vor einem Heckaufprall möglich, auf Grund der entsprechende Sicherheitssysteme im Fahrzeug aktiviert werden können oder das Fahrzeug, falls die Frontsensoren dies erlauben, beschleunigen kann, um einen Heckaufprall zu vermeiden.

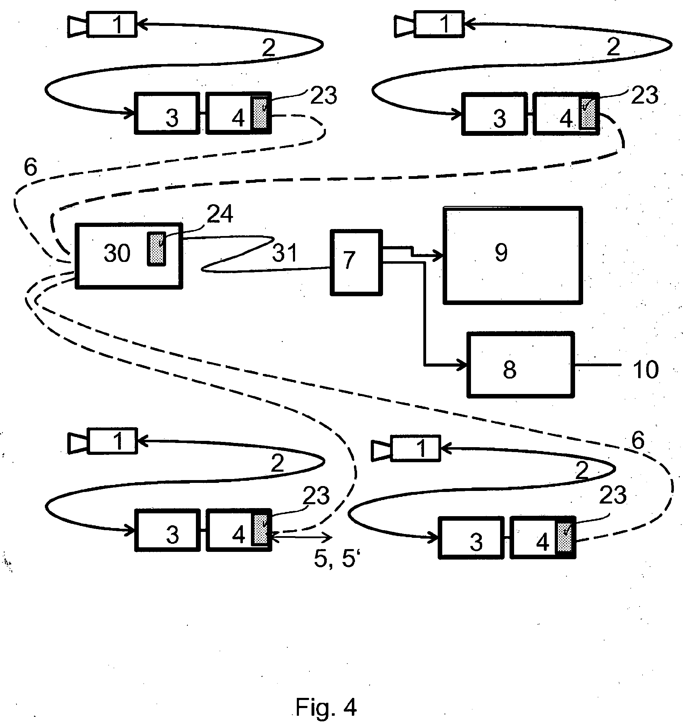

Fig. 4 zeigt eine Ausführungsform mit mehr als einem optischen Sensor 1. Die Bauteile und Funktionen entsprechen hier den für Fig. 3 gemachten Ausführungen.

Die Bilddaten der vier optischen Sensoren 1 werden über die Datenleitungen 6, die hier zur besseren Unterscheidung gestrichelt dargestellt sind, mit der einer Multiple-Empfängerplatine 30 verbunden. Vier Empfänger entschlüsseln die LVDS Daten und ein DSP 24 verarbeitet die Daten in einem zweiten Verarbeitungsschritt. Über den Ausgang und eine weitere lange Datenleitung 31 werden die Daten wieder serielle an die Display-Empfänger-Platine 7 und an den Bildschirm 9 weitergegeben. Es somit möglich vier Einzelbilder darzustellen, die auf einem einzelnen Bildschirm 9 nacheinander oder in geteilter Darstellung sichtbar sind, oder aber auf mehr als einem Bildschirm 9, 9', 9" wiedergegeben werden. Die Datenleitung 31 verbindet den seriellen Ausgang der Multiple-Empfängerplatine 30 mit dem Eingang der Display-Empfängerplatine 7. Die Verbindungsleitung trennt den zweiten Verarbeitungsschritt des Kamerabildes von der eigentlichen Darstellung auf dem Bildschirm.

In einer vorteilhaften Ausführungsform sitzen zwei optische Sensoren 1 in noch vorhandenen Außenspiegeln oder an diesen Anbaupositionen. Die erste variable Datenleitung 2 führt in den Kofferraum des Fahrzeugs, indem sich die Empfängerplatine 3, die Bildauswertungsplatine 4 und die Multiple-Empfängerplatine 30 befinden. Über die variable Datenverbindung 31 wird die Display-Empfängerplatine 7 und der Bildschirm 9 angesteuert, der sich im Blick des Fahrer im Innenraum befindet.

Die Bilddaten der vier optischen Sensoren 1 werden aber in dieser Ausführungsform einer weiteren Verarbeitung zugeführt. Die Bilddaten werden nach ihrer Einzelverarbeitung auf den Bildauswertungs-Platinen 4 einer weiteren zweiten Verarbeitung unterzogen. Auf der Multiple-Empfängerplatine 30 befindet sich ein zusätzlicher Prozessor 24, der die Bilddaten zu einem Gesamtbild mit einer Perspektive von oben zusammenstellt. Dieses zusammengestellte Bild wird auf dem Bildschirm 9 dargestellt. Mit vier optischen Sensoren 1 lässt sich nicht nur ein BirdView-Bild erstellen sondern auch die oben bereits erwähnten Funktionen der Totwinkelüberwachung. Durch die Verwendung von Fischaugen-Optiken ist auch ein Blick nach hinten möglich und die Funktionen Spurwechsel-Assistent, Querverkehr-Überwachung, Rückfahrkamera usw., sind realisierbar.

Die Erfindung ist nicht auf die Ausführung mit getrennten Platinen beschränkt. Die genannten Empfängerplatinen können in den mit Datenleitungen verbundenen Boards integriert werden, so dass eine Baueinheit entsteht. Damit wären die Module 2 und 4 auf einem gemeinsamen Board integriert, sowie die Module 7 und 9.

Gegebenenfalls lässt sich auch das Auswertungsboard 8 zusätzlich dazu integrieren.

## Patentansprüche

1. Kraftfahrzeugrückblickeinrichtung mit mindestens einem optischen Sensor (1,1'), der mit mindestens einer Bildauswertungs-Platine (4) und mit mindestens einem Bildschirm (9) verbunden ist, **dadurch gekennzeichnet, dass** der mindestens eine optische Sensor (1) über eine Empfängerplatine (3) mit der Bildauswertungs-Platine (4) und die Bildauswertungs-Platine (4) über eine Display-Empfängerplatine (7) mit dem Bildschirm (9) verbunden ist, wobei Datenleitungen (2, 6) für serielle Daten zwischen dem optischen Sensor (1) und der mit dem optischen Sensor (1) verbundenen Empfängerplatine (3) und zwischen der Bildauswertungs-Platine (4) und der Display-Empfängerplatine (7), ausgelegt sind und die Verbindungslänge 1 bis 10 m beträgt und wobei Datenleitungen (22, 21) für parallele Datenübertragung zwischen der mit dem optischen Sensor (1) verbundenen Empfängerplatine (3) und der Bildauswertungs-Platine (4) sowie zwischen der Display-Empfängerplatine (7) und dem Bildschirm (9) über einen Abstand kleiner als 100 mm ausgelegt sind.

2. Kraftfahrzeugrückblickeinrichtung nach Anspruch 1 **dadurch gekennzeichnet, dass** die Datenleitungen (2, 6) für serielle Daten Twisted-Quad-Kabel sind.

3. Kraftfahrzeugrückblickeinrichtung nach Anspruch 1 oder 2 **dadurch gekennzeichnet, dass** die seriellen Daten des Bildsignals für die Übertragung mit einer Übertragungskodierung kodiert sind.

4. Kraftfahrzeugrückblickeinrichtung nach einem der vorhergehenden Ansprüche, **dadurch gekennzeichnet, dass** die Bildauswertungs-Platine (4) einen programmierbaren Rechner (23) enthält.

5. Kraftfahrzeugrückblickeinrichtung nach Anspruch 4, **dadurch gekennzeichnet, dass** der programmierbare Rechner (23) der Bildauswertungs-Platine (4) die Bilddaten entzerrt.

6. Kraftfahrzeugrückblickeinrichtung nach Ansprüche 4, 5, **dadurch gekennzeichnet, dass** der programmierbare Rechner (23) der Bildauswertungs-Platine (4) die Bilddaten zusätzlich einer Bild-Auswertung auf Gefahren- oder Informationssituationen unterzieht.

7. Kraftfahrzeugrückblickeinrichtung nach einem der vorhergehenden Ansprüche, **dadurch gekennzeichnet, dass** die Bildauswertungs-Platine (4) Schnittstellen (5, 5') aufweist.

8. Kraftfahrzeugrückblickeinrichtung nach Anspruch 7, **dadurch gekennzeichnet, dass** die Schnittstellen (5, 5') als Verbindung zum Bussystem des Fahrzeugs oder zu einer Warneinrichtung dienen.

9. Kraftfahrzeugrückblickeinrichtung nach einem der vorhergehenden Ansprüche, **dadurch gekennzeichnet, dass** die Bilddaten der Display-Empfängerplatine (7) über die Datenleitung (21) mit einer Prüfplatine (8) verbunden sind.

10. Kraftfahrzeugrückblickeinrichtung nach Anspruch 9, **dadurch gekennzeichnet, dass** die Prüfplatine (8) Daten über eine Schnittstelle (10) zur Auswertung und/oder Aufzeichnung bereitstellt.

11. Kraftfahrzeugrückblickeinrichtung nach einem der vorhergehenden Ansprüche, **dadurch gekennzeichnet, dass** eine Multiple-Empfängerplatine (30), die mit mindestens einer Bildauswertungsplatine (4) verbunden ist, einen weiteren programmierbaren Rechner (24) enthält.

12. Kraftfahrzeugrückblickeinrichtung nach Anspruch 11, **dadurch gekennzeichnet, dass** der programmierbare Rechner (24) der Multiple-Empfängerplatine (30) Bilddaten mehrerer optischen Sensoren (1) zusammenführt.

13. Kraftfahrzeugrückblickeinrichtung nach einem der vorhergehenden Ansprüche, **dadurch gekennzeichnet, dass** der Bildschirm (9) Bilddaten im Bird- View darstellt.

14. Kraftfahrzeugrückblickeinrichtung nach einem der Ansprüche 11 oder 12, **dadurch gekennzeichnet, dass** die Multiple-Empfängerplatine (30) über eine weitere Verbindung (31) von 2 bis 10 m Länge mit der Display-Empfängerplatine (7) verbunden ist.

15. Kraftfahrzeugrückblickeinrichtung nach einem der vorhergehenden Ansprüche, **dadurch gekennzeichnet, dass** die Bilddaten des optischen Sensors (1) RAW- RGB-Signalen oder YUV-Signalen sind.

## Claims

1. A motor vehicle rear view device having at least one optical sensor (1, 1') which is connected to at least one image evaluation circuit board (4) and to at least one screen (9), **characterized in that** the at least one optical sensor (1) is connected to the image evaluation circuit board (4) via a receiver circuit board (3), and the image evaluation circuit board (4) is connected to the screen (9) via a display receiver circuit board (7), wherein data cables (2, 6) are designed for serial data between the optical sensor (1) and the receiver circuit board (3) connected to the optical sensor (1) and between the image evaluation circuit board (4) and the display receiver circuit board (7), and the connection length is 1 to 10 m and wherein data cables (22, 21) are designed for parallel data transmission between the receiver circuit board (3) connected to the optical sensor (1) and the image evaluation circuit board (4) as well as between the display receiver circuit board (7) and the screen (9) over a distance of less than 100 mm.

2. The motor vehicle rear view device according to Claim 1, **characterized in that** the data cables (2, 6) for serial data are twisted quad cables.

3. The motor vehicle rear view device according to Claim 1 or 2, **characterized in that** the serial data of the image signal is coded for transmission with a transmission coding.

4. The motor vehicle rear view device according to any one of the preceding claims, **characterized in that** the image evaluation circuit board (4) contains a programmable processor (23).

5. The motor vehicle rear view device according to Claim 4, **characterized in that** the programmable processor (23) of the image evaluation circuit board (4) rectifies the image data.

6. The motor vehicle rear view device according to Claims 4 or 5, **characterized in that** the programmable processor (23) of the image evaluation circuit board (4) additionally subjects the image data to an image evaluation for hazardous situations or information situations.

7. The motor vehicle rear view device according to any one of the preceding claims, **characterized in that** the image evaluation circuit board (4) comprises interfaces (5, 5').

8. The motor vehicle rear view device according to Claim 7, **characterized in that** the interfaces (5, 5') serve as a connection to the bus system of the motor vehicle or to a warning device.

9. The motor vehicle rear view device according to any one of the preceding claims, **characterized in that** the image data of the display receiver circuit board (7) is connected to a test circuit board (8) via the data cable (21).

10. The motor vehicle rear view device according to Claim 9, **characterized in that** the test circuit board (8) prepares data for evaluation and/or recording via an interface (10).

11. The motor vehicle rear view device according to any one of the preceding claims, **characterized in that** a multiple receiver circuit board (30), which is connected to at least one image evaluation circuit board (4), contains a further programmable processor (24).

12. The motor vehicle rear view device according to Claim 11, **characterized in that** the programmable processor (24) of the multiple receiver circuit board (30) brings together image data from a plurality of optical sensors (1).

13. The motor vehicle rear view device according to any one of the preceding claims, **characterized in that** the screen (9) shows image data in a bird's eye view.

14. The motor vehicle rear view device according to any one of Claims 11 or 12, **characterized in that** the multiple receiver circuit board (30) is connected to the display receiver circuit board (7) via a further connection (31) of 2 to 10 m in length.

15. The motor vehicle rear view device according to any one of the preceding claims, **characterized in that** the image data of the optical sensor (1) takes the form of RAW-RGB signals or YUV signals.

## Revendications

1. Dispositif de rétroviseur pour un véhicule automobile, ayant au moins un capteur optique (1, 1'), qui est relié à au moins une carte d'évaluation d'image (4) et à au moins un écran (9), **caractérisé en ce que** le au moins un capteur optique (1) est relié à la carte d'évaluation d'image (4) par l'intermédiaire d'une carte de réception (3), et la carte d'évaluation d'image (4) est reliée à l'écran (9) par l'intermédiaire d'une carte de réception d'affichage (7), dans lequel des lignes de données (2, 6) sont conçus pour des données série entre le capteur optique (1) et la carte de réception (3) reliée au capteur optique (1), et entre la carte d'évaluation d'image (4) et la carte de réception d'affichage (7), et la longueur de connexion est de 1 à 10 m, et dans lequel des lignes de données (22, 21) pour le transfert de données en parallèle entre la carte de réception (3) reliée au capteur optique (1) et la carte d'évaluation d'image (4), ainsi qu'entre la carte de réception d'affichage (7) et l'écran (9), sont conçues sur une distance inférieure à 100 mm.

2. Dispositif de rétroviseur pour un véhicule automobile selon la revendication 1, **caractérisé en ce que** les lignes de données (2, 6) pour données série sont des câbles à quartes torsadées.

3. Dispositif de rétroviseur pour un véhicule automobile selon la revendication 1 ou 2, **caractérisé en ce que** les données série du signal d'image sont codées pour le transfert avec un codage de transfert.

4. Dispositif de rétroviseur pour un véhicule automobile selon l'une quelconque des revendications précédentes, **caractérisé en ce que** la carte d'évaluation d'image (4) comprend un calculateur programmable (23).

5. Dispositif de rétroviseur pour un véhicule automobile selon la revendication 4, **caractérisé en ce que** le calculateur programmable de la carte d'évaluation d'image (4) égalise les données d'image.

6. Dispositif de rétroviseur pour un véhicule automobile selon les revendications 4 ou 5, **caractérisé en ce que** le calculateur programmable (23) de la carte d'évaluation d'image (4) soumet en outre les données d'image à une évaluation d'image concernant des situations de danger ou d'information.

7. Dispositif de rétroviseur pour un véhicule automobile selon l'une quelconque des revendications précédentes, **caractérisé en ce que** la carte d'évaluation d'image (4) a des interfaces (5, 5').

8. Dispositif de rétroviseur pour un véhicule automobile selon la revendication 7, **caractérisé en ce que** les interfaces (5, 5') servent comme connexion au système de bus du véhicule automobile, ou à un dispositif d'avertissement.

9. Dispositif de rétroviseur pour un véhicule automobile selon l'une quelconque des revendications précédentes, **caractérisé en ce que** les données d'image de la carte de réception d'affichage (7) sont connectées à une carte de test (8) par l'intermédiaire de la ligne de données (21).

10. Dispositif de rétroviseur pour un véhicule automobile selon la revendication 9, **caractérisé en ce que** la carte de test (8) prépare des données par l'intermédiaire d'une interface (10) pour évaluation et/ou enregistrement.

11. Dispositif de rétroviseur pour un véhicule automobile selon l'une quelconque des revendications précédentes, **caractérisé en ce qu'**une carte multi-réception (30), qui est connecté avec au moins une carte d'évaluation d'image (4), comprenant un autre calculateur programmable (24).

12. Dispositif de rétroviseur pour un véhicule automobile selon la revendication 11, **caractérisé en ce que** le calculateur programmable (24) de la carte multi-réception (30) fusionne les données d'image de plusieurs capteurs optiques (1).

13. Dispositif de rétroviseur pour un véhicule automobile selon l'une quelconque des revendications précédentes, **caractérisé en ce que** l'écran (9) affiche les données d'image en vue d'oiseau.

14. Dispositif de rétroviseur pour un véhicule automobile selon la revendication 11 ou 12, **caractérisé en ce que** la carte multi-réception (30), via une connexion supplémentaire (31) de 2 à 10 m de longueur, est connectée à la carte de réception d'affichage (7).

15. Dispositif de rétroviseur pour un véhicule automobile selon l'une quelconque des revendications précédentes, **caractérisé en ce que** les données d'image du capteur optique (1) sont des signaux RAW-RVB ou des signaux YUV.
